(19) Europäisches Patentamt
European Patent Office
Office européen des brevets

(11) **EP 3 009 192 A1**

(12) **EUROPÄISCHE PATENTANMELDUNG**

(43) Veröffentlichungstag:
20.04.2016 Patentblatt 2016/16

(21) Anmeldenummer: 15190247.5

(22) Anmeldetag: 16.10.2015

(51) Int Cl.:
*B03D 1/02* (2006.01)          *G01F 23/16* (2006.01)
*G01D 21/00* (2006.01)          *G01N 9/26* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(30) Priorität: **17.10.2014 DE 102014115192**

(71) Anmelder: **Hochschule für Technik und Wirtschaft des Saarlandes 66117 Saarbrücken (DE)**

(72) Erfinder:
• KIMMERLE, Klaus
66424 Homburg (DE)
• ZIEGLER, Eike-Eric
66131 Saarbrücken (DE)
• BRAUN, Gerhard
66346 Püttlingen (DE)

(74) Vertreter: **Lecomte & Partners P.O. Box 1623 1016 Luxembourg (LU)**

(54) **VERFAHREN UND SYSTEM ZUR BESTIMMUNG UND KONTROLLE VON PROZESSPARAMETERN IN EINEM FLOTATIONSBEHÄLTER**

(57) Die Erfindung betrifft ein Verfahren zur Bestimmung von Prozessparametern in einem Flotationsbehälter, umfassend das Einleiten von Gas (125) in einen eine Flüssigkeit enthaltenden Flotationsbehälter (100) zur Erzeugung eines Gas-Flüssigkeitsgemischs, wobei das Gas in Form von Gasblasen (120) in der Flüssigkeit (110) aufsteigt und sich an der Oberfläche des Gas-Flüssigkeitsgemischs eine Schaumschicht (130) bildet. Weiterhin umfasst das Verfahren das Messen einer ersten Flüssigkeitsfüllstandshöhe (161) in einem ersten Messgefäß (141), wobei das erste Messgefäß (141) eine erste Öffnung (151) aufweist, welche auf einer ersten Höhe (ho1) innerhalb des Gas-Flüssigkeitsgemischs angeordnet ist, sodass Flüssigkeit des Gas-Flüssigkeitsgemischs durch die erste Öffnung (151) in das erste Messgefäß (141) eindringt. In einem weiteren Schritt umfasst das Verfahren das Messen einer zweiten Flüssigkeitsfüllstandshöhe (162) in einem zweiten Messgefäß (142), wobei das zweite Messgefäß (142) eine zweite Öffnung (152) aufweist, welche auf einer zweiten, von der ersten Höhe ($h_{O1}$) verschiedenen Höhe ($h_{O2}$) innerhalb des Gas-Flüssigkeitsgemischs angeordnet ist, sodass Flüssigkeit des Gas-Flüssigkeitsgemisch durch die zweite Öffnung (152) in das zweite Messgefäß (142) eindringt. In Abhängigkeit der ersten und der zweiten ermittelten Flüssigkeitsfüllstandshöhen ($h_{s1}$, $h_{s2}$) sowie der Höhen der ersten und der zweiten Öffnungen ($h_{O1}$, $h_{O2}$) wird folgend die mittlere Dichte des Gas-Flüssigkeitsgemischs ($\rho_{GF}$) bestimmt. Weiterhin ist die Erfindung auf ein entsprechendes System zur Bestimmung von Prozessparametern eines Gas-Flüssigkeitsgemischs in einem Flotationsbehälter gerichtet, welches zusätzlich eine Recheneinheit (170), insbesondere einen Mikrocontroller zum Bestimmen der mittleren Dichte des Gas-Flüssigkeitsgemischs ($\rho_{GF}$) im Flotationsbehälter (100) in Abhängigkeit der Füllstandshöhen im ersten und im zweiten Messgefäß ($h_{s1}$, $h_{s2}$) sowie der Höhen der ersten und der zweiten Öffnungen im Flotationsbehälter ($h_{O1}$, $h_{O2}$) umfasst.

FIG 1

**Beschreibung**

Gebiet der Erfindung

Die Erfindung betrifft ein Verfahren sowie ein System zur Bestimmung und/oder Kontrolle von Prozessparametern in einem Flotationsbehälter.

Stand der Technik

Werden zwei Fluide unterschiedlichen Aggregatszustandes, flüssig und gasförmig, gemischt, entsteht ein Zweiphasen-Fluid. Mischt man zum Beispiel mittels einer Venturidüse Gas in einen Wasserstrom, dann entsteht ein Zweiphasen-Fluid aus Wasser und Gasblasen. Wird dieses Zweiphasen-Fluid in einen Behälter, insbesondere einen Flotationsbehälter bzw. Abschäumer geleitet, dann steigen diese Gasblasen auf und entweichen an der Wasseroberfläche. Befinden sich im Zweiphasen-Fluid im Flotationsbehälter zusätzlich noch tertiäre Stoffe, zum Beispiel schaumerzeugende Substanzen, Partikel und Gelöstes, dann entsteht mit Partikeln und Gelöstem beladener Schaum. Diese Tertiärstoffe werden mit dem Schaum an der Oberfläche ausgetragen.

Leider ist in diesem Fall der Ort der Wasseroberfläche bzw. der Wasserspiegel wegen der Tertiärstoffe meist nicht mehr als Phasengrenzfläche erkennbar, was die Steuerung oder Regelung des Prozesses erheblich erschwert oder unmöglich macht. Beispielsweise ist die Schaumhöhe nicht messbar und der Übergang von Flüssigkeit zu Gasblasen, das heißt vom Gasflüssigkeitsgemisch hin zum Schaum, erstreckt sich über einen nicht eindeutig definierbaren Bereich.

Um die Höhe des Flüssigkeitsspiegels in einem Flotationsbehälter zu bestimmen, sind Druckmessungen bekannt, die allerdings in vielen Fällen sehr ungenau sind, da die Dichte des Flüssigkeitsgemischs nicht hinreichend bekannt oder nur ungenau ermittelbar ist. Füllstandsmessungen über Schwimmkörper sind ebenfalls nicht brauchbar, da die Schaumbildung an der Oberfläche sowie Verschmutzungen eine hinreichend genaue Messung verhindern. Messungen des Flüssigkeitsspiegels mit Ultraschall sind ebenfalls zu ungenau, da der vorhandene Schaum das Messergebnis verfälscht. Kapazitätsmessungen führen ebenfalls zu mangelhaften Ergebnissen, da Verschmutzungen auch diese Ergebnisse verfälschen.

Eine weitere Größe von Interesse ist die mittlere Dichte im Flotationsbehälter. Bestimmungsmethoden und Vorrichtungen für Dichtemessungen sind zwar an sich bekannt, wie zum Beispiel Leitfähigkeitsmessungen, Ultraschall-Tomographie, Widerstandsmessungen oder Manometer-Messungen. Nachteilig an diesen Messmethoden ist allerdings, dass Messergebnisse durch inhomogene und variierende Bedingungen im Flotationsapparat verfälscht bzw. ungenau sein können und entweder kostenaufwendig oder wartungsanfällig sind.

Da eine Vielzahl von Prozessparametern, wie die Höhe des Flüssigkeitsspiegels oder die mittlere Dichte des Gas-Flüssigkeitsgemischs im Flotationsbehälter nicht hinreichend bekannt sind, werden Flotationsapparaturen in der Regel mit konstanten Betriebsparametern betrieben.

Daher ist bei der Entstehung von kritischen Prozesszuständen ein automatisches Entgegenwirken durch Änderung von Prozessparametern nicht möglich. Lediglich durch visuelle Beobachtung von Bedienungspersonal und durch manuelles Eingreifen, beispielsweise durch Anpassung der Gaszufuhr, kann der Prozess teils spät und in vielen Fällen nur unpräzise in einen mehr oder weniger stabilen Zustand überführt werden.

Dadurch ergibt sich im Allgemeinen ein wenig effizienter Betrieb bis hin zur Alarmauslösung aufgrund zu geringer Aufreinigungsqualität im Flotationsprozess.

Aufgabe der Erfindung ist es daher, eine Möglichkeit bereitzustellen Prozessparameter in Flotationsbehältern bzw. Reaktoren zur Aufreinigung einer Flüssigkeit besser überwachen und/oder steuern bzw. regeln zu können. Dabei sollen Effizienz und Qualität des Prozesses unter geringem Kosteneinsatz verbessert werden.

Vorzugsweise sollte eine eigenständige, kontinuierliche, automatisierte Überwachung und/oder Steuerung bzw. Regelung ermöglicht werden.

Zumindest soll wenigstens einer der in dieser Anmeldung genannten Nachteile überwunden werden.

Offenbarung der Erfindung

Die gestellte technische Aufgabe wird durch die Merkmale des erfindungsgemäßen Verfahrens gelöst. Die Erfindung betrifft ein Verfahren zur Bestimmung und/oder zur Kontrolle bzw. Beeinflussung von Prozessparametern in einem Flotationsbehälter (Reaktor zum Aufreinigen einer Flüssigkeit bzw. Abschäumer). Dabei umfasst das Verfahren das Einleiten von Gas in einen eine Flüssigkeit enthaltenden Flotationsbehälter zur Erzeugung eines Gas-Flüssigkeitsgemischs, wobei das Gas in Form von Gasblasen in der Flüssigkeit aufsteigt und sich an der Oberfläche des Gas-Flüssigkeitsgemischs eine Schaumschicht bildet. Ferner umfasst das Verfahren ein Messen einer ersten Flüssigkeitsfüllstandshöhe in einem ersten Messgefäß, das eine erste Öffnung aufweist, die auf einer ersten Höhe innerhalb des Gas-Flüssigkeitsgemischs angeordnet ist, sodass Flüssigkeit des Gas-Flüssigkeitsgemischs durch die erste Öffnung in das erste Messgefäß eindringt. Weiterhin wird eine zweite Flüssigkeitsfüllstandshöhe in einem zweiten Messgefäß gemessen, wobei das zweite Messgefäß eine zweite Öffnung aufweist, die auf einer zweiten, von der ersten Höhe verschiedenen Höhe innerhalb des Gas-Flüssigkeitsgemischs angeordnet ist, sodass Flüssigkeit des Gas-Flüssigkeitsgemischs durch die zweite Öffnung in das zweite Messgefäß eindringt. In einem weiteren Schritt wird folgend die mittlere Dichte des Gas-Flüssigkeitsgemischs im Flotationsbehälter in Abhängigkeit der gemessenen ersten und zweiten Flüssigkeitsfüllstandshöhen sowie der Höhen der ersten und der zweiten Öffnungen bestimmt. Dieses Verfahren erlaubt somit eine kostengünstige, genaue und verlässliche Bestimmung der mittleren Dichte des Gasflüssigkeitsgemischs auf deren Basis weitere Größen zur Steuerung und/oder Regelung des Flotations- bzw. Abschäumprozesses steuerbar und/oder regelbar sind.

Bevorzugt kann ebenfalls auf Basis der ermittelten mittleren Dichte des Gas-Flüssigkeitsgemischs die Höhe des Flüssigkeitsspiegels im Flotationsbehälter und/oder der Gasanteil im Flotationsbehälter bestimmt werden.

Auf Basis des ermittelten Gasanteils kann zum Beispiel in Kenntnis der Begasungsrate bzw. deren Einflusses der Gasanteil an die Flüssigkeit oder Rohlösung mit etwaigen Tertiärstoffen angepasst werden, damit nur die Gasmenge eingetragen wird, die zurzeit benötigt wird. Somit können Energie und Kosten eingespart werden.

Ferner kann durch die Kenntnis der mittleren Dichte des Gas-Flüssigkeitsgemischs und der Höhe des Flüssigkeitsspiegels der Reaktor kontinuierlich geregelt werden, wenn das Gesamtsystem durch Prozessfluktuationen einen vorgesehenen Betriebszustand verlässt. Dadurch kann die Qualität des Prozesses, die Qualität der Austragsfunktion und die Zusammensetzung des Reaktorinhaltes konstant gehalten werden.

Insbesondere können die Dichte des Zweiphasen-Fluids und die Höhe des Flüssigkeitsspiegels gleichzeitig kontinuierlich bestimmt werden. Somit umfasst eine weitere bevorzugte Ausführungsform der Erfindung ein kontinuierliches Messen der Füllstandshöhen sowie ein kontinuierliches Bestimmen bzw. Berechnen der mittleren Dichte des Gas-Flüssigkeitsgemischs im Flotationsbehälter. Dies kann bevorzugt mittels einer Recheneinheit, insbesondere eines Mikrocontrollers erfolgen.

Gemäß einer weiteren bevorzugten Ausführungsform kann die Höhe des Flüssigkeitsspiegels auf Basis der ermittelten Werte eingestellt werden. Dies kann zum Beispiel durch Änderung des Volumenstroms der zugeführten bzw. abgeführten Flüssigkeit erfolgen.

Durch die Einstellung der Höhe des Flüssigkeitsspiegels kann die Schaumhöhe und somit die Restfeuchte des Schaumes gesteuert werden, wobei eine größere Schaumhöhe zu einer geringeren Restfeuchte führt. Durch die Einstellung der Höhe des Flüssigkeitsspiegels kann ferner die Konzentrationen von ausgetragenen Produkten maximiert und/oder konstant gehalten werden. Somit kann auch ein Flüssigkeitsaustrag minimiert werden, wodurch Betriebskosten gesenkt werden können.

In einer weiteren bevorzugten Ausführungsform werden die mittlere Dichte des Gas-Flüssigkeitsgemischs und/oder die Höhe des Wasserspiegels automatisch und kontinuierlich geregelt. Dadurch kann die Anzahl von Bedienpersonal minimiert werden, wodurch Personalkosten reduziert und die Verlässlichkeit des Prozesses gefördert werden.

Zudem kann der Reaktor in unterschiedlichen Anwendungsfällen angewendet werden, da die Begasungsrate auf unterschiedliche Substanzen in der Rohlösung angepasst werden kann. Alternativ oder zusätzlich kann der Reaktor in eine selbstlernende Regelungsstrategie (zum Beispiel gemäß einer Fuzzy-Technologie oder eines neuronalen Netzes) eingebunden werden, das heißt anhand einer solchen geregelt werden.

Gemäß einer weiteren bevorzugten Ausführungsform kann bei einer gegebenen Begasungsrate der aktuell bestimmte Gasanteil mit einem "Normal"-Gasanteil verglichen werden. Dadurch können geeignete Maßnahmen zur Verbesserung des Flotationsprozesses eingeleitet werden. Zum Beispiel können diese Maßnahmen eine oder mehrere der folgenden Maßnahmen umfassen: Ändern des Volumenstroms der Flüssigkeit; Änderung des Volumenstroms des Gases und/oder der Zusammensetzung des Gases (vorgenannte Maßnahmen bevorzugt bei geringer Abweichung des bestimmten Gasanteils vom gewünschten Normal-Gasanteil, insbesondere Abweichungen von weniger als 5% vorzugsweise von weniger als 1%); Einbringen einer schaumerzeugenden Reagenz bzw. eines schaumerzeugenden Stoffes (zum Beispiel aus der Gruppe der Tenside oder biologische oberflächenaktive Substanzen) zum Annähern des Gasanteils an den Normal-Gasanteil (insbesondere bei Abweichungen, die größer als die obengenannten Abweichungen sind); Ausschalten des Flotationssystems und/oder Erzeugen eines Alarms (insbesondere falls der Gasanteil nicht zu dem gewünschten Normal-Gasanteil führbar bzw. regelbar ist). Durch solche Maßnahmen kann der Flotationsprozess an sich ändernde Belastungsfälle angepasst werden. Diese Belastungsfälle sind z. B. eine erhöhte Schmutzfracht und/oder das vermehrte Auftreten von Fetten und Ölen.

Gemäß einer weiteren bevorzugten Ausführungsform wird die mittlere Dichte $\rho_{GF}$ des Gas-Flüssigkeitsge-mischs durch die Gleichung $\rho_{GF} = \rho_F \cdot (((h_{S2} - h_{S1}) / \Delta h_{O12}) + 1)$ bestimmt, wobei $\rho_{GF}$ die mittlere Dichte des Gas-Flüssigkeitsgemischs, $\rho_F$ die Dichte der Flüssigkeit, $h_{S1}$ die Füllstandshöhe der Flüssigkeit im ersten Messgefäß, $h_{S2}$ die Füllstandshöhe der Flüssigkeit im zweiten Messgefäß und $\Delta h_{O12}$ die Höhendifferenz der Öffnungen der beiden Messgefäße ist.

Gemäß einer weiteren bevorzugten Ausführungsform wird der Flüssigkeitsspiegel $h_{FS}$ im Flotationsbehälter durch die Gleichung: $h_{FS} = (((\rho_{GF} - \rho_F) \cdot h_{O2} + \rho_F \cdot h_{S2}) / \rho_{GF})$ bestimmt, wobei $\rho_{GF}$ die mittlere Dichte des Gas-Flüssigkeitsgemischs, $\rho_F$ die Dichte der Flüssigkeit, $h_{S2}$ die Füllstandshöhe der Flüssigkeit im zweiten Messgefäß und $h_{O2}$ die Höhe der Öffnung des zweiten Messgefäßes, durch die Flüssigkeit aus dem Flotationsbehälter in das zweite Messgefäß eindringt, ist und die Öffnung des zweiten Messbehälters unterhalb der Öffnung des ersten Messbehälters angeordnet ist.

Gemäß einer weiteren bevorzugten Ausführungsform wird der Gasanteil GA im Flotationsbehälter durch die Gleichung $GA = (\rho_{GF} - \rho_F) / (\rho_G - \rho_F)$ bestimmt, wobei $\rho_{GF}$ die mittlere Dichte des Gas-Flüssigkeitsgemischs, $\rho_F$ die Dichte der Flüssigkeit und $\rho_G$ die Dichte des Gases ist.

Ferner ist die vorliegende Erfindung ebenfalls auf ein System zur Bestimmung und/oder Beeinflussung von Prozessparametern eines Gas-Flüssigkeitsgemischs in einem Flotationsbehälter vorzugsweise zur Durchführung des hierin genannten Verfahrens oder einer seiner bevorzugten Ausführungsformen gerichtet. Das System umfasst einen Flotationsbehälter zum Aufnehmen einer Flüssigkeit und Mittel zum Einleiten eines Gases in diese Flüssigkeit zur Bildung eines Gas-Flüssigkeitsgemischs. Ferner weist das System ein erstes Messgefäß mit einer ersten Öffnung, welche auf einer ersten Höhe innerhalb des Gas-Flüssigkeitsgemischs angeordnet ist, auf, sodass Flüssigkeit des Gas-Flüssigkeitsgemischs aus dem Flotationsbehälter durch die erste Öffnung in das erste Messgefäß eindringen kann. Zudem verfügt das System über ein zweites Messgefäß mit einer zweiten Öffnung, die auf einer zweiten, von der ersten Höhe verschiedenen Höhe innerhalb des Gas-Flüssigkeitsgemischs angeordnet ist, sodass Flüssigkeit des Gas-Flüssigkeitsgemischs aus dem Flotationsbehälter durch die zweite Öffnung in das zweite Messgefäß eindringen kann. Füllstandshöhen von jeweils in das erste und das zweite Messgefäß eingedrungener Flüssigkeit sind über entsprechende Mittel zur Bestimmung der Flüssigkeits-Füllstandshöhe ermittelbar. Schließlich verfügt das System über eine Recheneinheit, insbesondere ein Mikrocontroller, zum Bestimmen der mittleren Dichte des Gas-Flüssigkeitsgemischs im Flotationsbehälter in Abhängigkeit der Füllstandshöhen im ersten und im zweiten Messgefäß sowie der Höhen der ersten und der zweiten Öffnungen im Flotationsbehälter.

In einer bevorzugten Ausführungsform umfasst das System ferner Mittel zum Verhindern des Eindringens von Gasblasen in die erste und/oder zweite Öffnung, wodurch Ungenauigkeiten der Messung weiter verringert werden können. Ferner werden dadurch Druckschwankungen ausgeglichen, wodurch das Messsignal geglättet wird.

Gemäß einer weiteren bevorzugten Ausführungsform ist das erste Messgefäß als Rohr ausgebildet, wobei das Rohr an einem ersten unteren Ende die erste Öffnung aufweist und an einem weiteren oberen Ende eine obere Öffnung aufweist. Alternativ oder zusätzlich ist das zweite Messgefäß als Rohr ausgebildet, wobei das zweite Rohr an einem unteren Ende die zweite Öffnung aufweist und an einem weiteren oberen Ende eine weitere obere Öffnung aufweist.

Gemäß einer weiteren bevorzugten Ausführungsform umfasst mindestens eines der Messgefäße einen im Wesentlichen U-förmigen Rohrabschnitt, dessen Schenkel nach oben gerichtet sind, wobei sich an einem Ende eines Schenkels die Öffnung, durch die Flüssigkeit in das jeweilige Messgefäß eindringen kann, befindet. Durch diese Anordnung kann ebenfalls das Eindringen von aufsteigenden Gasblasen in die Messgefäße verhindert werden.

Gemäß einer weiteren bevorzugten Ausführungsform umfasst das System an der ersten und/oder der zweiten Öffnung ein semi-permeables Element, das ein Eindringen von Gasblasen und Feststoffen in die jeweilige Öffnung verhindert Das semipermeable Element kann insbesondere durch einen Filter, ein Sieb, einen porösen Körper oder einen Schwamm gebildet sein.

Gemäß einer weiteren bevorzugten Ausführungsform umfassen die Mittel zum Messen von Füllstandshöhen mindestens einen Ultraschallsensor bzw. ein kontaktfreies Messgerät oder - je Messgefäß - einen Schwimmer. Dabei ist eine Messung mittels Ultraschall von besonderem Vorteil, da durch eine kontaktfreie Messung Verschmutzung und Kontaminierungen und damit beispielsweise Korrosionsprobleme und Deckschichtbildung vermieden werden können.

Gemäß einer weiteren bevorzugten Ausführungsform umfasst der Flotationsbehälter an einem oberen Ende eine Öffnung, wobei mindestens eines der Messgefäße durch diese Öffnung in das Gas-Flüssigkeitsgemisch einführbar und wieder aus diesem entnehmbar ist. Mit anderen Worten handelt es sich um ein portables bzw. separates Messgefäß. Insbesondere können bereits bestehende Flotationsapparaturen mit einem solchen Gefäß nachgerüstet werden. Eine Entleerung des Flotationsbehälters ist nicht notwendig. Werden durch die Öffnung am oberen Ende des Flotationsbehälters zwei Messgefäße eingeführt, können diese auch miteinander verbunden oder einstückig ausgebildet sein.

Gemäß einer weiteren bevorzugten Ausführungsform umfassen die Mittel zum Einleiten von Gas einen Einlass zum Einleiten von Gas oder eines Gas-Flüssigkeitsgemischs in den Flotationsbehälter, wobei der Einlass in einer unteren Hälfte, insbesondere in einem unteren Drittel, des Flotationsbehälters angeordnet ist, sodass der Flotationsbehälter von unten nach oben durch eingeleitetes Gas durchströmbar ist.

Gemäß einer weiteren bevorzugten Ausführungsform ist eine der ersten und der zweiten Öffnungen unterhalb des Einlasses angeordnet und eine weitere der ersten und der zweiten Öffnungen oberhalb des Einlasses angeordnet. Alternativ sind sowohl die erste als auch die zweite Öffnung oberhalb des Einlasses angeordnet.

Gemäß einer weiteren bevorzugten Ausführungsform umfasst das System eines oder mehrere der folgenden Mittel: Mittel zum Absaugen von Schaum einer sich oberhalb des Flüssigkeitsspiegels des Gas-Flüssigkeitsgemischs bildenden Schaumschicht; Mittel zum Zuführen der Flüssigkeit des Gas-Flüssigkeitsgemischs, vorzugsweise in die obere Hälfte des Flotationsbehälters; Mittel zum Absaugen von Flüssigkeit, vorzugsweise unterhalb eines Einlasses zum Einleiten von Gas und eines Anschlusses zum Zuführen der Flüssigkeit in den Flotationsbehälter; und Mittel zum Absaugen und vorzugsweise zum Rückführen von sich oberhalb der Schaumschicht befindendem Gas ("Off-Gas", bspw. Ozon oder andere Gase, die einerseits sicherheitstechnisch bedenklich sein können und andererseits in den Prozess zur Nutzung zurückgeführt werden können).

Sämtliche Merkmale der oben beschriebenen Ausführungsformen können miteinander kombiniert oder gegeneinander ausgetauscht werden.

Kurze Beschreibung der Figuren

Im Folgenden werden kurz die Figuren der Ausführungsbeispiele beschrieben. Weitere Details sind der detaillierten Beschreibung der Ausführungsbeispiele zu entnehmen. Es zeigen:

Figur 1    eine schematisches Funktionsschaltbild gemäß einem Ausführungsbeispiel eines erfindungsgemäßen Systems;

Figur 2    ein schematischer Querschnitt gemäß einem Ausführungsbeispiel einer erfindungsgemäßen Vorrichtung;

Figur 3    ein schematischer Querschnitt gemäß einem weiteren Ausführungsbeispiel einer erfindungsgemäßen Vorrichtung;

Figur 4    ein schematischer Teilquerschnitt gemäß einem weiteren Ausführungsbeispiel einer erfindungsgemäßen Vorrichtung; und

Figur 5    ein schematisches Blockdiagramm zu einem Ausführungsbeispiel des erfindungsgemäßen Verfahrens.

**Detaillierte Beschreibung der Ausführungsbeispiele**

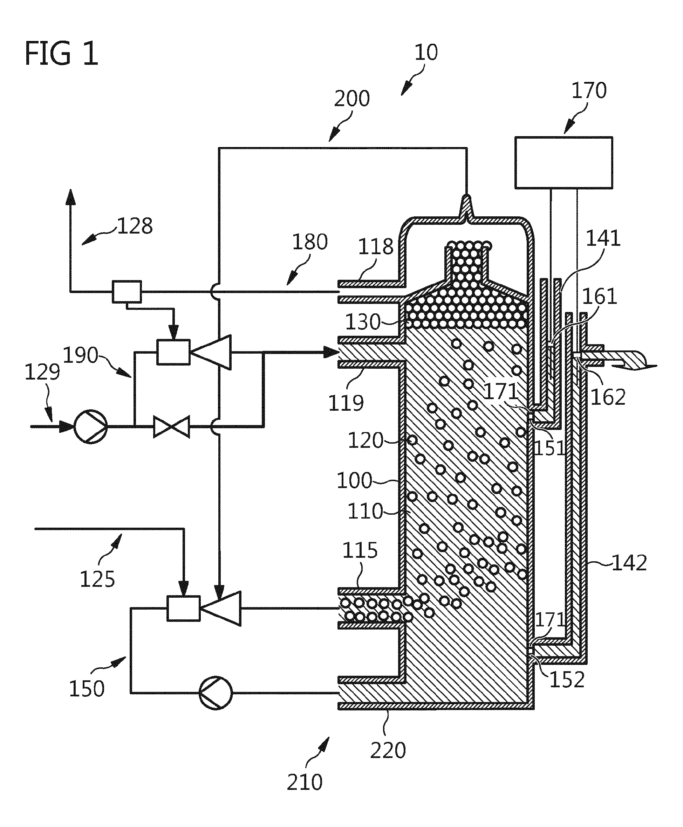

Die Figur 1 zeigt ein schematisches Schaltbild eines erfindungsgemäßen Systems 10 zur Bestimmung und/oder Beeinflussung von Prozessparametern eines Gas-Flüssigkeitsgemischs 110 in einem Flotationsbehälter 100. Gemäß der Darstellung wird in einen mit Flüssigkeit gefüllten Flotationsbehälter 100 Gas durch einen Anschluss 115 eingeleitet. Dieses Gas steigt in Form von Blasen 120 zur Flüssigkeitsoberfläche im Behälter 100 auf und bildet eine Schaumschicht 130. Solche Flotationsverfahren werden insbesondere zur Aufreinigung von Flüssigkeiten verwendet. So werden zum Beispiel (tertiäre) Stoffe, wie Partikel, Partikelverbände Kolloide, wasserunlösliche Substanzen, poröse Partikel mit darin enthaltenen (zum Beispiel gelösten) Substanzen, Flüssigkeitstropfen aus nichtwasserlöslichen oder nicht mit Wasser mischbaren Substanzen, wie zum Beispiel Fett oder Öl und gelösten Substanzen an der Grenzfläche, welche an den Gasblasen 120 zwischen flüssiger und gasförmiger Phase entsteht, aus der Flüssigkeit gesammelt, sodass sie sich an der Oberfläche des Gas-Flüssigkeitsgemischs 110 anreichern und ggfs. unter Schaumbildung abgesaugt werden können. Hierzu ist am Behälter 100 ein Anschluss 118 zur Absaugung bzw. zum Austrag des Schaums 130, das heißt der mit Fracht angereicherten Phase, vorgesehen. Ferner umfasst das System 10 einen Flüssigkeitszulauf 119 und einen Flüssigkeitsrücklauf 220. Über den Rücklauf 220, der Teil von Mitteln 210 zum Absaugen von Flüssigkeit ist, kann vorzugsweise am Boden des Behälters 100 abgesaugte Flüssigkeit Mitteln 150 zum Einleiten des Gases zugeführt werden. Somit kann das Gas bevorzugt in einer Verströmungsvorrichtung mit abgesaugter Flüssigkeit vermischt werden, sodass ein Gemisch aus Gasblasen 120 und Flüssigkeit über den Einlass 115 dem Behälter 100 zugeführt wird. Alternativ kann das Gas allerdings auch mit neuer Flüssigkeit vermischt werden und über den Einlass 115 in den Behälter 100 geführt werden. Dabei kann das Gas über eine Gaszufuhr oder Leitung 125 den Mitteln 150 zum Einleiten des Gases zugeführt werden. Ferner kann sich oberhalb der Schaumschicht 130 ansammelndes oder befindliches Gas durch Mittel 200 zum Absaugen oder Ableiten von Gas den Mitteln 150 und/oder 190 wieder zugeführt werden. Zum Beispiel kann der Flotationsbehälter an seinem oberen Ende geschlossen sein oder eine Haube zum Absaugen des Gases oberhalb der sich bildenden Schaumschicht 130 aufweisen. Ferner können die den Anschluss zum Absaugen von Schaum 118 umfassenden Mittel 180 Schaum aus der Schaumschicht 130 absaugen und darin enthaltende Flüssigkeit, optional nach einer Filterung oder Aufreinigung, Mitteln 190 zum Zuführen von Flüssigkeit in den Behälter 100 zuführen. Somit können die Mittel 190 zum Zuführen von Flüssigkeit neue Flüssigkeit über eine Flüssigkeitszufuhr 129, optional unter Vermischung mit durch die Mittel 180 rückgeführter Flüssigkeit, über den Anschluss 119 dem Behälter 100 zuführen. Die zuvor im Schaum 130 enthaltenen tertiären Stoffe werden mittels einer Leitung 128 abgeführt.

Vorzugsweise umfasst der Flotationsbehälter einen Flüssigkeitsablauf, welcher unabhängig vom Flüssigkeitsrücklauf 220 ausgebildet ist. Hierzu kann beispielsweise, wie ebenfalls in der Abbildung dargestellt, das Gefäß 142, dessen primäre Funktion als Messgefäß im Folgenden noch beschrieben wird, gleichzeitig als Überlauf dienen. Das Gefäß 142 kann auch lediglich eine obere Öffnung aufweisen. Der besagte Überlauf kann auch an einer anderen Stelle des Flotationsbehälters vorgesehen werden, ohne dass eine solche Ausführung von den Zeichnungen gezeigt wird.

Das System 10 weist ein erstes Messgefäß 141 und ein zweites Messgefäß 142 auf, welche jeweils über Öffnungen 151, 152 verfügen, über die die Messgefäße 141, 142 in fluider Verbindung mit dem Inneren des Behälters 100 stehen. Im vorliegenden Ausführungsbeispiel sind die beiden Messgefäße 141, 142 als Rohre ausgebildet. Sie können jedoch grundsätzlich auch andere Formen aufweisen. Darüber hinaus ist die Öffnung 152 des zweiten Messgefäßes 142 unterhalb des Gaseinlasses 115 und die Öffnung 151 des ersten Messgefäßes 141 oberhalb des Einlasses 115 angeordnet. Vorzugsweise weisen die Messgefäße der vorliegenden Erfindung mindestens zwei Öffnungen auf, eine untere Öffnung durch die Flüssigkeit des Gas-Flüssigkeitsgemischs 110 in das Gefäß gelangen kann und eine obere Öffnung, die auf einer Höhe oberhalb der Flüssigkeitsoberfläche des Gas-Flüssigkeitsgemisches 110 liegt. Gemäß der Figur 1 erstrecken sich die beiden Messgefäße 141, 142 durch eine Seitenwand des Behälters 100 bzw. sind an eine solche Wand angeschlossen, sodass Flüssigkeit aus dem Inneren des Behälters 100 in die Gefäße 141, 142 gelangen kann. Durch die fluide Verbindung mit dem Behälterinneren bildet sich in den Gefäßen 141, 142 jeweils eine Flüssigkeitssäule. Die entsprechende Füllstandshöhe ist über Mittel 161, 162 zur Bestimmung der Füllstandshöhe, vorzugweise automatisch, ablesbar. Solche Mittel können durch die abgebildeten Schwimmer 161, 162 gebildet sein. Alternativ und bevorzugt können die Mittel allerdings auch durch Ultraschallsensoren gebildet werden, wodurch Verschmutzungen und Fehlfunktionen vorgebeugt werden kann.

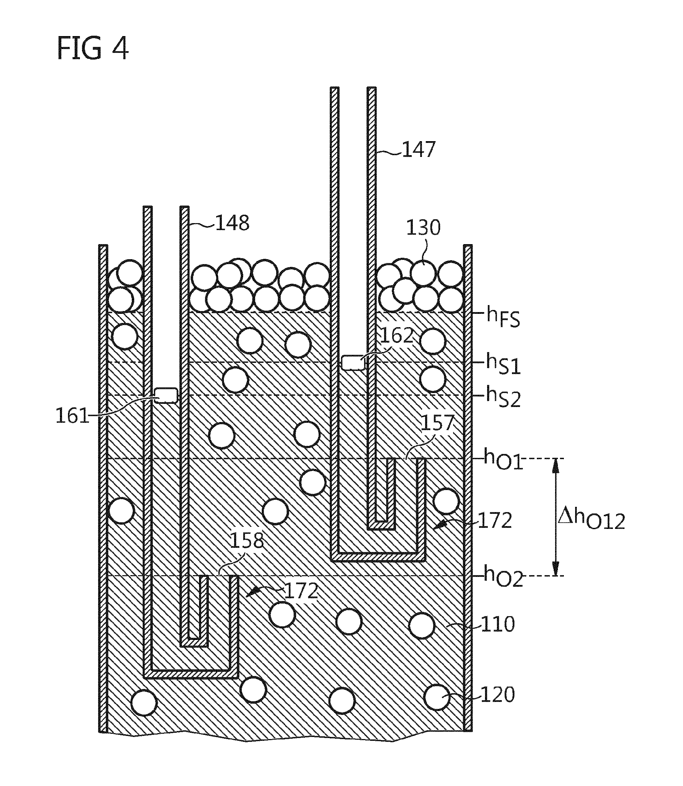

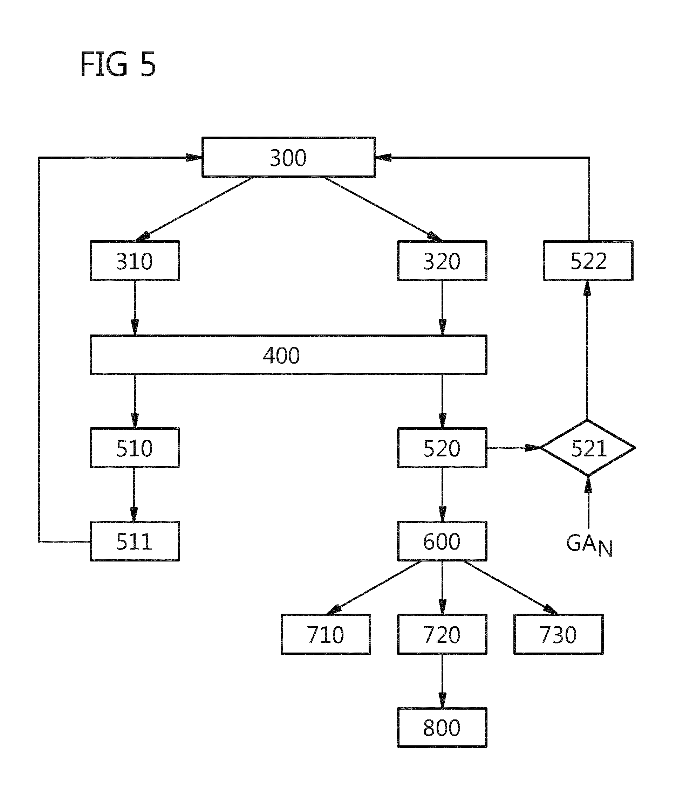

Die durch die Mittel 161, 162 zur Bestimmung der Füllstandshöhen abgelesenen Werte werden an eine Recheneinheit 170, zum Beispiel einen Computer, eine speicherprogrammierbare Steuerung (SPS) oder vorzugsweise einen Mikrocontroller weitergeleitet. Diese Recheneinheit 170 ist dazu ausgebildet (zum Beispiel mit entsprechenden Rechenvorschriften versehen), aus den beiden Messwerten der Füllstandshöhen, die vorzugsweise kontinuierlich ermittelt werden, ebenfalls vorzugsweise kontinuierlich, eine mittlere Dichte des Gas-Flüssigkeitsgemischs 110 zu bestimmen bzw. zu berechnen. Hierzu benötigt die Recheneinheit zusätzlich zu den in den Messgefäßen 141, 142 ermittelten Füllstandshöhen lediglich Werte über die Höhen der Öffnungen 151, 152 im Behälter 100 bzw. im Gas-Flüssigkeitsgemisch 110. Die mittlere Dichte des Gas-Flüssigkeitsgemischs 110 ist von zentraler Bedeutung für die Möglichkeit Prozesse innerhalb des Flotationsbehälters 100 zu steuern. Dies wird insbesondere in Bezug auf die Figuren 4 und 5 näher erläutert. Ein Verfahren und eine Vorrichtung bzw. ein System 10 zur Berechnung der mittleren Dichte unter Verwendung der dargestellten volumetrischen Messmethode mittels zweier Flüssigkeitssäulen ist in diesem Zusammenhang in vielerlei Hinsicht vorteilhaft. Das vorgestellte System ist leicht sauber bzw. instand zu halten, einfach bedienbar und zuverlässig. Zudem wird eine hohe Messgenauigkeit erreicht.

Um die Messergebnisse noch weiter zu verbessern, ist jede der unteren Öffnungen 151, 152 mit einem semipermeablen Element 171 versehen. Ein solches Element 171 kann zum Beispiel eines oder mehrere der folgenden Mittel umfassen: einen Filter, eine Fritte, ein Sieb, ein Lochblech und einen Schwamm. Dadurch kann zum einen ein Eindringen von etwaigen Feststoffen in die Messgeräte 141, 142 verhindert werden. Zum anderen kann das Eindringen von Gasblasen in die Messgeräte 141, 142 verhindert werden durch die die Messung verfälscht werden könnte bzw. die Aufnahme von eindeutigen oder konstanten Messwerten erschwert wird.

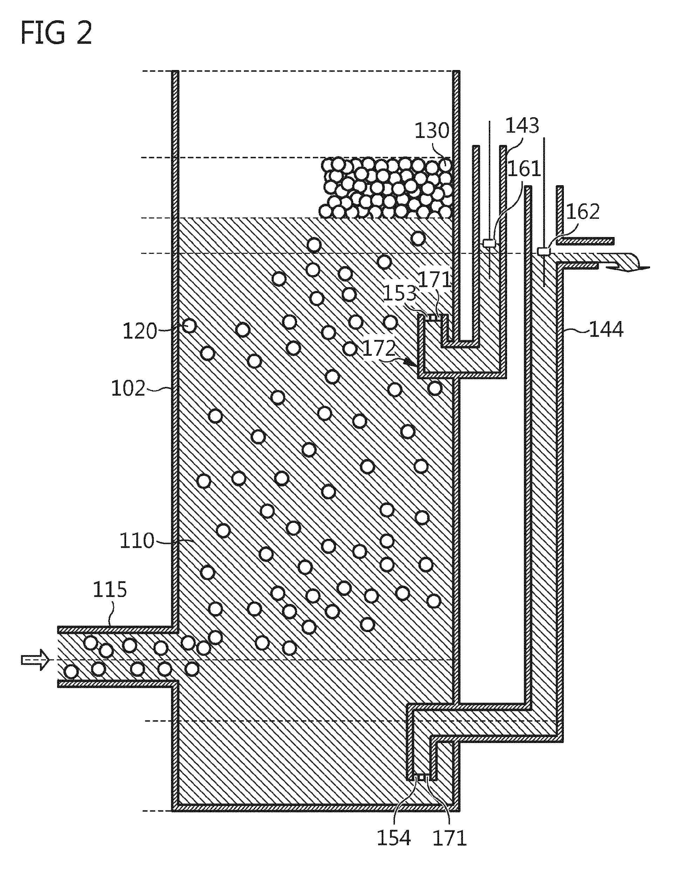

Die Figur 2 offenbart ein weiteres Ausführungsbeispiel, in dem der Übersichtlichkeit halber, lediglich der Flotationsbehälter 102 samt einem Gasanschluss 115 und zwei Messgefäßen 143, 144 gezeigt ist. Wie im ersten Ausführungsbeispiel strömt ein Gas durch den Einlass 115 in den Behälter 102 ein, wodurch Gasblasen 120 in dem Gas-Flüssigkeitsgemisch 110 nach oben aufsteigen und an der Oberfläche des Gemischs 110 eine Schaumschicht 130 bilden. Zur besseren Verständlichkeit werden in den Figuren der Ausführungsbeispiele gleiche oder gleichwirkende Elemente mit denselben Bezugszeichen dargestellt. Die beiden in der Figur 2 dargestellten Messgefäße 143, 144 sind abermals als Rohre mit unteren Öffnungen 153, 154 ausgebildet, die sich in das Gas-Flüssigkeitsgemisch 110 durch die Behälterwand hinein erstrecken.

Besonders hervorzuheben ist in diesem Ausführungsbeispiel, dass das Messgefäß 143 einen U-förmig gekrümmten Abschnitt 172 aufweist, dessen Schenkel im Wesentlichen nach oben ausgerichtet sind. Diese Form umfasst an einem Ende die Öffnung 153. Durch eine derartige Ausbildung des unteren Endes des ersten Messgefäßes 143 kann noch sicherer verhindert werden, dass Gasblasen 120 in das Messgefäß gelangen und so eine Messung der Füllstandshöhe mittels der Mittel 161 verfälschen könnten. Wie ebenfalls in der Abbildung dargestellt, kann das Gefäß 144 gleichzeitig als Überlauf dienen, dies ist jedoch lediglich ein optionales Merkmal und für die Erfindung unwesentlich. Das Gefäß 144 könnte lediglich eine obere Öffnung aufweisen.

Der Flotationsbehälter 102 kann optional weitere bereits in der Figur 1 dargestellte Elemente umfassen. Grundsätzlich können die in den Figuren und Ausführungsbeispielen dieser Anmeldung dargestellten Merkmale auch in anderen Ausführungsbeispielen Verwendung finden.

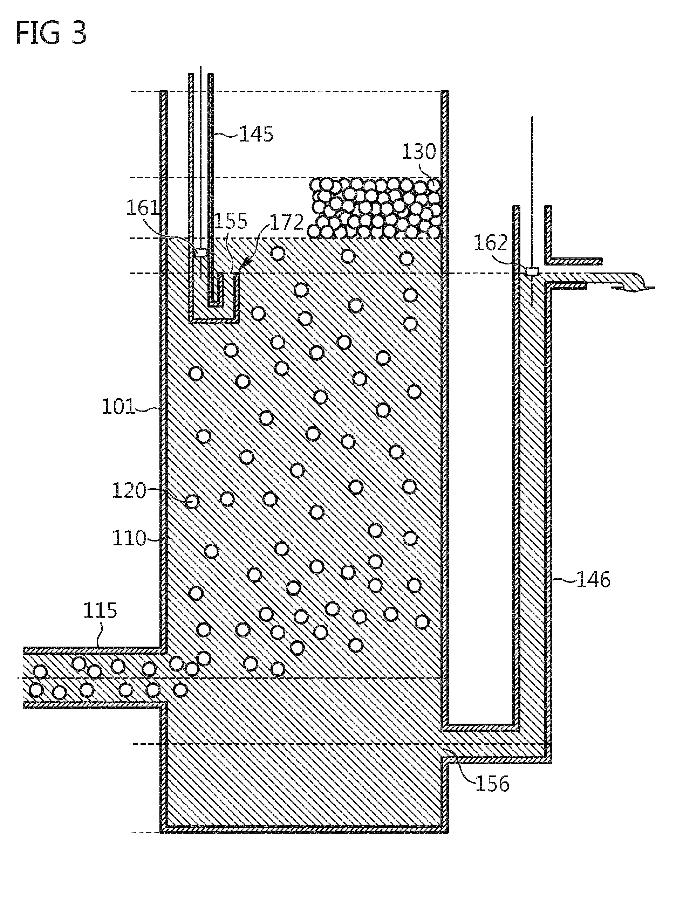

Die Figur 3 zeigt ein weiteres erfindungsgemäßes Ausführungsbeispiel, welches einen Flotationsbehälter 101 samt Gaseinlass 115, ein sich im Flotationsbehälter 101 befindendes Gas-Flüssigkeitsgemisch 110, darin aufsteigende Gasblasen 120 und eine sich an der Oberfläche des Gas-Flüssigkeitsgemischs 110 bildende Schaumschicht 130 umfasst. Im Gegensatz zu den in den Figuren 1 und 2 dargestellten Beispielen, umfasst das System gemäß Figur 3 ein portables bzw. ein aus dem Flotationsbehälter 101 entnehmbares Messgefäß 145. Das Messgefäß 145 weist an seinem unteren Ende einen U-förmigen Abschnitt 172 auf und ist mit Mitteln zur Bestimmung der Füllstandshöhe der durch die Öffnung 155 in das Messgefäß 145 eindringenden Flüssigkeit versehen. Dabei wurde das Messgefäß 145 durch eine Öffnung am oberen Ende des Flotationsbehälters 101 in das Gas-Flüssigkeitsgemisch 110 eingeführt und kann jederzeit auch wieder durch diese Öffnung entnommen werden. Eine solche Lösung eignet sich vor Allem zur Nachrüstung bereits bestehender Abschäumer oder Flotationsanlagen.

Das zweite Messgefäß 146 umfasst eine Öffnung 156, durch die Flüssigkeit aus dem Flotationsbehälter 101 in das Gefäß 146 eindringen kann. Die Füllstandshöhe kann erneut über Mittel 162 zur Bestimmung der Füllstandshöhe bestimmt werden.

In der Figur 4 ist ein Schema gemäß einem weiteren Ausführungsbeispiel gezeigt, in dem zwei Messgefäße 147, 148 dargestellt sind, die jeweils ähnlich zu dem Messgefäß 145 aus Figur 3 ausgebildet sind. Mit anderen Worten umfassen beide Messgefäße 147, 148 U-förmige Endabschnitte 172, die ein Eindringen von Gasblasen 120 in die Gefäße 147, 148 durch ihre unteren Öffnungen 157, 158 verhindern. Im Beispiel sind beide Gefäße 147, 148 oberhalb eines Einlasses zur Einleitung von Gas in den Flotationsbehälter vorgesehen. Die beiden Messgefäße 147, 148 können auch aus einem gemeinsamen Körper, vorzugsweise mit höhenverschiebbaren Öffnungen 157, 158, gebildet sein.

Die Höhe der unteren Öffnung 158 des Messgefäßes 148 ist mit $h_{O2}$ gekennzeichnet und die Höhe der oberen Öffnung 157 des Messgefäßes 147 ist mit $h_{O1}$ gekennzeichnet. Die Differenz beider Höhen $h_{O2}$, $h_{O1}$ ist durch $\Delta h_{O12}$ gegeben. Ebenfalls dargestellt sind die Füllstandshöhen $h_{S2}$ und $h_{S1}$ in den beiden Messgefäßen 148 und 147. Die Höhe des Flüssigkeitsspiegels bzw. die Höhe des Spiegels des Gas-Flüssigkeitsgemischs 110 ist mit $h_{FS}$ bezeichnet. Mit anderen Worten stellt diese Höhe $h_{FS}$ schematisch die Grenzfläche zwischen der Schaumschicht 130 und dem Gasflüssigkeitsgemisch 110 dar. Grundsätzlich könnten entsprechende Größen auch in den Figuren 1 bis 3 eingezeichnet sein. Der Übersichtlichkeit halber wurde davon allerdings abgesehen.

Anhand der Darstellung der Figur 4 und den genannten Hilfsgrößen können Rückschlüsse auf die mittlere Dichte $\rho_{GF}$ des Gas-Flüssigkeitsgemisches 110 gezogen werden.

So lässt sich die mittlere Dichte $\rho_{GF}$ des Gas-Flüssigkeitsgemischs 110 wie folgt gemäß Gleichung (I) angeben:

$$\rho_{GF} = \rho_F \cdot (((h_{S2} - h_{S1}) / \Delta h_{O12}) + 1) \qquad\qquad (I)$$

wobei $\rho_F$ die Dichte der verwendeten Flüssigkeit darstellt.

Falls gewünscht kann anhand des Wertes für die mittlere Dichte des Gas-Flüssigkeitsgemischs $\rho_{GF}$ der Flüssigkeitsspiegel $h_{FS}$ im Flotationsbehälter durch die folgende Gleichung (II) bestimmen:

$$h_{FS} = (((\rho_{GF} - \rho_F) \cdot h_{O2} + \rho_F \cdot h_{S2}) / \rho_{GF}) \qquad\qquad (II)$$

Aus diesen Größen lässt sich optional ebenfalls der Gasanteil GA im Flotationsbehälter gemäß der folgenden Gleichung (III) ermitteln:

$$GA = (\rho_{GF} - \rho_F) / (\rho_G - \rho_F) \qquad\qquad (III)$$

Dabei stellt der Gasanteil GA das Verhältnis des Volumens des Gases $V_G$ im Gas-Flüssigkeitsgemisch 110 zum Gesamtvolumen $V_{GF}$ des Gas-Flüssigkeitsgemischs 110 dar.

Somit erlauben Anordnungen, wie sie in den Figuren 1 bis 4 exemplarisch dargestellt sind, die Ermittlung zentraler Größen, die entscheidend für eine Kontrolle, Regelung und/oder Steuerung in Flotationsapparaturen sind. Auf Basis der in den Gleichung (I), (II), und/oder (III) ermittelten Größen lassen sich weitere Prozessparameter ermitteln.

Insbesondere können so Abläufe in Flotationsgefäßen automatisiert werden, die bisher nur manuell erfolgen konnten bzw. der Überwachung durch Personal bedurften.

Ist zum Beispiel der Gasanteil GA bekannt, kann der Gasblasendurchmesser $d_{GB}$ als Funktion des Gasvolumenstroms $Vpt_G$, des Flüssigkeitsvolumenstroms $Vpt_F$, des Gasanteils GA, der Querschnittsfläche des Flotationsbehälters $A_{FB}$ und der Stoffwerte (Dichten) von Gas und Flüssigkeit bestimmt werden.

Somit ist auch das Gasblasenvolumen $V_{GBL}$ bekannt.

Dies wiederum ermöglicht die Berechnung der Anzahl der Gasblasen im Flotationsbehälter $n_{GB}$ gemäß Gleichung (IV):

$$n_{GB} = V_{FB} / V_{GB} \cdot GA / (1 - GA) \qquad (IV)$$

mit dem Füllvolumen des Flotationsbehälters $V_{FB}$ und dem Gasblasenvolumen $V_{GB}$.

Eine weitere bestimmbare Größe ist die Phasengrenzfläche aller Gasblasen [m²] $A_{BL,FB}$ gemäß der Gleichung (V):

$$A_{GB,FB} = A_{GB} \cdot V_{FB} / V_{GB} \cdot GA / (1 - GA) \qquad (V)$$

mit der Oberfläche einer Gasblase $A_{GB}$.

Die Anzahl an Gasblasen pro Reaktorvolumen bzw. pro Flotationsbehältervolumen $n_{GB,V,FB}$ [1/m³] lässt sich außerdem gemäß Gleichung (IV-) angeben als:

$$n_{GB,V,FB} = 1 / V_{GB} \cdot GA / (1 - GA) \qquad (VI)$$

Alternativ oder zusätzlich lässt sich auch $Apt_{GB,A,FB}$, der Phasengrenzflächenfluss $Apt_{GB,FB}$ pro Reaktorquerschnittsfläche bzw. pro Flotationsbehälterquerschnittsfläche $A_{GB,FB}$ (auch Blasenflussdichte Sb in [1/s] genannt) bestimmen. Dies kann anhand der ermittelten Größen durch die folgende Gleichung (VII) erfolgen:

$$Apt_{GB,A,FB} = Apt_{GB,FB} / A_{GB,FB} \qquad (VII)$$

Mit der erfindungsgemäßen Vorrichtung bzw. dem erfindungsgemäßen Verfahren können insbesondere die Höhe des Flüssigkeitsspiegels und die Dichte des Zweiphasengemisches kontinuierlich gemessen werden, sodass eine kontinuierliche Bestimmung der obengenannten Größen ermöglicht wird. Dies kann zum Beispiel durch eine Recheneinheit, insbesondere einen Mikrocontroller erfolgen.

In vielen Fällen ist auch die Begasungsrate BR (der Gaseintrag bzw. die Menge des pro Zeit zugeführten Gases [1/h oder 1/s]) bekannt. Diese kann gemäß Gleichung (VIII) als

$$BR = Vpt_G / V_F \qquad (VIII)$$

Mit dem Flüssigkeitsvolumen $V_F$ ausgedrückt werden.

Somit besteht ein Zusammenhang zwischen Gasanteil GA und Gaseintrag BR. Der ermittelte Gasanteil (Istwert) kann mit einem Normal-Gasanteil $GA_N$ verglichen werden, der normalerweise bei einer bestimmten Begasungsrate BR vorliegen sollte. Bei Auftreten einer Differenz ($\Delta GA$) zwischen einem gewünschten Normal-Gasanteil $GA_N$ (Sollwert) können Maßnahmen getroffen werden, um den zu einer gewissen Begasungsrate BR zugehörigen Normal-Gasanteil $GA_N$ wieder einzustellen. Zum Beispiel können diese Maßnahmen eine oder mehrere der folgenden Maßnahmen umfassen: Ändern des Volumenstroms der Flüssigkeit; Änderung des Volumenstroms des Gases und/oder der Zusammensetzung des Gases (vorgenannte Maßnahmen bevorzugt bei geringer Abweichung des bestimmten Gasanteils vom gewünschten Normal-Gasanteil, insbesondere Abweichungen von weniger als 5% vorzugsweise von weniger als 1%); Einbringen von schaumerzeugenden Reagenzien (Schäumer) oder Reagenzien die eine Anlagerung der abzutrennenden Substanzen verbessern (Sammler) zum Annähern des Gasanteils an den Normal-Gasanteil (insbesondere bei Abweichungen, die größer als die obengenannten Abweichungen sind); Ausschalten des Flotationssystems und/oder Erzeugen eines Alarms (insbesondere falls der Gasanteil nicht zu dem gewünschten Normal-Gasanteil führbar bzw. regelbar ist).

Dies kann ebenfalls automatisiert, d.h. durch eine Steuerung auf Basis der ermittelten Werte des Gasanteils erfolgen.

In den Figuren 3 und 4 sind die Messgefäße ohne semipermeable Elemente 171 dargestellt. Solche Elemente könnten jedoch auch in diesen Ausführungsbeispielen zusätzlich vorgesehen werden.

Die Figur 5 zeigt ein schematisches Blockdiagramm gemäß einem Ausführungsbeispiel zur Messung und Kontrolle von Prozessparametern in einem Flotationsbehälter. Die dargestellten Schritte könnten zum Beispiel bei einem System gemäß den Figuren 1 bis 4 Anwendung finden. Obwohl in der Figur 5 eine Vielzahl von Schritten gezeigt ist, sind diese nicht als essentiell zu betrachten und sollen lediglich eine Vielzahl von Möglichkeiten, die das erfindungsgemäße Verfahren und System bieten, veranschaulichen.

Schritt 300 steht stellvertretend für den Flotations- bzw. Aufreinigungsprozess.

In den Schritten 310 und 320 werden Messungen der Füllstandshöhen in zwei Messgefäßen durchgeführt, wie sie zuvor in der Anmeldung beschrieben wurden. Die Messungen erfolgen bevorzugt gleichzeitig und optional kontinuierlich.

Im Schritt 400 erfolgt eine Ermittlung der mittleren Dichte des Gas-Flüssigkeitsgemischs $\rho_{GF}$ auf Basis der in den Schritten 310 und 320 ermittelten Werte der Füllstandshöhen in den Messgefäßen. Dieser Schritt erfolgt bevorzugt in der bereits zuvor genannten Recheneinheit.

Aus der ermittelten mittleren Dichte $\rho_{GF}$ können nachfolgend in einem Schritt 510 die Flüssigkeitshöhe im Flotationsbehälter sowie in einem Schritt 520 der Gasanteil bestimmt werden. Auch die Schritte 510 und 520 werden bevorzugt kontinuierlich in einer Recheneinheit durchgeführt.

In einem Schritt 511 kann folgend die Höhe des Flüssigkeitsspiegels eingestellt werden. Diese Einstellung wirkt auf den Flotationsprozess zurück. Durch die Einstellung der Höhe des Flüssigkeitsspiegels im Flotationsbehälter wird ebenfalls die Schaumhöhe beeinflusst bzw. eingestellt. Dadurch kann auch die Restfeuchte im Schaum eingestellt werden, wodurch die Menge an mit dem Schaum angeführter Flüssigkeit reduziert werden kann.

Der im Schritt 520 ermittelte Gasanteil kann zudem in einem Schritt 521 mit einem Normal-Gasanteil bzw. einem gewünschten Gasanteil $GA_N$ verglichen werden. Bei Auftreten einer Differenz zwischen dem ermittelten Istwert des Gasanteils und des gewünschten Gasanteils $GA_N$ können in einem Schritt 522 (vorzugsweise ebenfalls kontinuierlich und automatisiert) die bereits obengenannten Maßnahmen ergriffen werden, um den Gasanteil im Flotationsprozess wieder dem gewünschten Normal-Gasanteil $GA_N$ anzunähern.

In einem weiteren optionalen Schritt 600 kann auf Basis der zuvor ermittelten Werte das Gasblasenvolumen bestimmt werden, woraus in den Schritten 710, 720 und 730 die Anzahl der Gasblasen im Flotationsbehälter (Schritt 710), die Phasengrenzfläche aller Gasblasen im Flotationsbehälter (Schritt 720) sowie die Anzahl der Gasblasen pro Flotationsbehältervolumen (Schritt 730) bestimmt werden können.

Aus der gemäß Schritt 720 ermittelten Phasengrenzfläche kann ferner auf den Phasengrenzflächenfluss pro Flotationsbehälterquerschnittsfläche geschlossen werden (Schritt 800).

Die in den Schritten 400, 510, 520, 600, 710, 720, 730 und 800 ermittelten Größen können beispielsweise anhand der obengenannten Gleichungen (I) bis (VII) ermittelt werden.

Obwohl die Figur 5 eine Vielzahl von Verfahrensschritten zeigt, ist die Erfindung nicht auf die dargestellte Kombination beschränkt.

Bei der genannten Flüssigkeit kann es sich zum Beispiel um Wasser, insbesondere Salz- oder Süßwasser, Abwasser, Kohlenwasserstoffe, Säuren, Basen und Kombinationen dieser oder eine auf Wasser basierende Nährlösung bzw. Nährdispersion handeln.

In der Flüssigkeit können sich tertiäre Stoffe, z. B. schaumerzeugende Substanzen, einzelne Partikel, Partikelverbände, Kolloide, poröse Partikel mit darin enthaltenen gelösten Substanzen, Flüssigkeitstropfen bestehend aus nichtwassermischbaren Substanzen und/oder gelöste Substanzen befinden.

Als Gas kommen zum Beispiel Luft, Stickstoff, Sauerstoff, Ozon, Anestetika, Desinfektionsgase und deren Mischungen in Frage.

Der Flotationsbehälter und/oder die Messgefäße können zum Beispiel aus Glas, Kunststoff, Plexiglas oder Metall bestehen.

Bei Prozessparametern kann es sich beispielsweise um eine oder mehrere der folgenden Größen handeln: Die mittlere Dichte des Gasflüssigkeitsgemischs, die Höhe des Flüssigkeitsspiegels, der Gasanteil, die Schaumhöhe, die Restfeuchte des Schaums, der Gasblasendurchmesser, das Volumen der Gasblasen, die Begasungsrate, der Volumenstrom des eingeleiteten Gases, der Volumenstrom eingeleiteter Flüssigkeit, die Zusammensetzung des eingeleiteten Gases, die Anzahl der Gasblasen im Flotationsbehälter, die Phasengrenzfläche aller Gasblasen im Flotationsbehälter sowie die Anzahl der Gasblasen pro Flotationsbehältervolumen sowie andere in dieser Anmeldung genannte Größen.

Einige Beispiele für den Einsatz der genannten Flotationsverfahren sind Aquakulturen (in diesem Fall können insbesondere Tenside, Biotenside, Nitrite, Ammonium, Eiweiße, Bakterien, Fäzes bzw. Kot und Futterreste ausgetragen werden), die Ölflotation (dabei werden Fette und/oder Öle aus Wasser ausgetragen), die Erzflotation (dabei werden Erze bzw. Erzpartikel aus Wasser, insbesondere Salzwasser ausgetragen) und die Abwasserbegasung (dabei werden zum Beispiel TOC - Substanzen, Flocken und oder Kolloide aus Abwasser ausgetragen).

Die oben beschriebenen Ausführungsbeispiele dienen vor allem dem besseren Verständnis der Erfindung und sollten nicht einschränkend verstanden werden. Die Merkmale der Ausführungsbeispiele können miteinander kombiniert oder gegeneinander ausgetauscht werden. Ferner können die beschriebenen Merkmale durch den Fachmann an vorhandene Gegebenheiten oder vorliegende Anforderungen angepasst werden. Der Schutzumfang der vorliegenden Patentanmeldung ergibt sich jedoch aus den Patentansprüchen.

**Bezugszeichenliste**

| | |
|---|---|
| 10 | System |
| 100 | Flotationsbehälter |
| 101 | Flotationsbehälter |
| 102 | Flotationsbehälter |
| 110 | Gas-Flüssigkeitsgemisch |
| 115 | Einlass zum Einleiten von Gas und Flüssigkeit |
| 118 | Anschluss zum Absaugen von Schaum |
| 119 | Anschluss zum Zuführen einer Flüssigkeit |
| 120 | Gasblasen |
| 125 | Gaszufuhr |
| 128 | Abführleitung |
| 129 | Flüssigkeitszufuhr |
| 130 | Schaumschicht |
| 141 | erstes Messgefäß |
| 142 | zweites Messgefäß |
| 143 | erstes Messgefäß |
| 144 | zweites Messgefäß |
| 145 | erstes Messgefäß |
| 146 | zweites Messgefäß |
| 147 | erstes Messgefäß |
| 148 | zweites Messgefäß |
| 150 | Mittel zum Einleiten eines Gases |
| 151 | erste Öffnung |
| 152 | zweite Öffnung |
| 153 | erste Öffnung |
| 154 | zweite Öffnung |
| 155 | erste Öffnung |
| 156 | zweite Öffnung |
| 157 | erste Öffnung |
| 158 | zweite Öffnung |
| 161 | Schwimmer |
| 162 | Schwimmer |
| 170 | Recheneinheit |
| 171 | semipermeables Element |
| 172 | U-förmiger Rohrabschnitt |
| 180 | Mittel zum Absaugen von Schaum |
| 190 | Mittel zum Zuführen von Flüssigkeit |
| 200 | Mittel zum Absaugen von Gas |
| 210 | Mittel zum Absaugen von Flüssigkeit |
| 300 | Flotationsprozess |
| 310 | Erste Füllstandsmessung im ersten Messgefäß |
| 320 | Zweite Füllstandsmessung im zweiten Messgefäß |
| 400 | Bestimmen der mittleren Dichte |
| 510 | Bestimmen der Höhe des Flüssigkeitsspiegels |
| 511 | Einstellen der Höhe des Flüssigkeitsspiegels |
| 520 | Bestimmen des Gasanteils |
| 521 | Vergleich des bestimmten Gasanteils mit einem Normal-Gasanteil |
| 522 | Anwenden von Maßnahmen zur Beeinflussung des Gasanteils |
| 600 | Bestimmen des Gasblasenvolumens |
| 710 | Bestimmen der Anzahl der Gasblasen im Flotationsbehälter |
| 720 | Bestimmen der Phasengrenzfläche aller Gasblasen im Flotationsbehälter |
| 730 | Bestimmen der Gasblasen pro Reaktorvolumen |
| 800 | Bestimmen des Phasengrenzflächenflusses pro Flotationsbehälterquerschnittsfläche |
| $\rho_F$ | Dichte der Flüssigkeit |

$\rho_G$     Dichte des Gases
$GA_N$     Normal-Gasanteil
$h_{S1}$     Füllstandshöhe der Flüssigkeit im ersten Messgefäß
$h_{S2}$     Füllstandshöhe der Flüssigkeit im zweiten Messgefäß
$h_{O1}$     Höhe der Öffnung des ersten Messgefäßes
$h_{O2}$     Höhe der Öffnung des zweiten Messgefäßes
$\Delta h_{O12}$     Höhendifferenz der Öffnungen des ersten und des zweiten Messgeräts

**Patentansprüche**

1. Verfahren zur Bestimmung von Prozessparametern in einem Flotationsbehälter (100, 101, 102), umfassend:

   Einleiten von Gas in einen eine Flüssigkeit enthaltenden Flotationsbehälter (100, 101, 102) zur Erzeugung eines Gas-Flüssigkeitsgemischs (110) in dem Flotationsbehälter (100, 101, 102), wobei das Gas in Form von Gasblasen (120) in der Flüssigkeit aufsteigt und sich an der Oberfläche des Gas-Flüssigkeitsgemischs (110) eine Schaumschicht (130) bildet,
   Messen einer ersten Flüssigkeitsfüllstandshöhe in einem ersten Messgefäß (141, 143, 145, 147), wobei das erste Messgefäß (141, 143, 145, 147) eine erste Öffnung (151, 153, 155, 157) aufweist, welche auf einer ersten Höhe innerhalb des Gas-Flüssigkeitsgemischs (110) angeordnet ist, sodass Flüssigkeit des Gas-Flüssigkeitsgemischs (110) durch die erste Öffnung (151, 153, 155, 157) in das erste Messgefäß (141, 143, 145, 147) eindringt,
   Messen einer zweiten Flüssigkeitsfüllstandshöhe in einem zweiten Messgefäß (142, 144, 146, 148), wobei das zweite Messgefäß (142, 144, 146, 148) eine zweite Öffnung (152, 154, 156, 158) aufweist, welche auf einer zweiten, von der ersten Höhe verschiedenen Höhe innerhalb des Gas-Flüssigkeitsgemischs (110) angeordnet ist, sodass Flüssigkeit des Gas-Flüssigkeitsgemischs (110) durch die zweite Öffnung (152, 154, 156, 158) in das zweite Messgefäß (142, 144, 146, 148) eindringt,
   Bestimmen der mittleren Dichte des Gas-Flüssigkeitsgemischs (110) im Flotationsbehälter (100, 101, 102) in Abhängigkeit der gemessenen ersten und zweiten Flüssigkeitsfüllstandshöhen sowie der Höhen der ersten und der zweiten Öffnungen (151, 153, 155, 157; 152, 154, 156, 158).

2. Das Verfahren gemäß Anspruch 1, weiterhin umfassend:

   Bestimmen mindestens einer der folgenden Größen auf Basis der ermittelten mittleren Dichte des Gas-Flüssigkeitsgemischs: Höhe des Flüssigkeitsspiegels im Flotationsbehälter und Gasanteil im Flotationsbehälter (100, 101, 102).

3. Das Verfahren gemäß Anspruch 1 oder 2, wobei die mittlere Dichte $\rho_{GF}$ des Gas-Flüssigkeitsgemischs durch die Gleichung

$$\rho_{GF} = \rho_F \cdot (((h_{S2} - h_{S1}) / \Delta h_{O12}) + 1)$$

   bestimmt wird und wobei

   $\rho_{GF}$ die mittlere Dichte des Gas-Flüssigkeitsgemischs (110),
   $\rho_F$ die Dichte der Flüssigkeit,
   $h_{S1}$ die Füllstandshöhe der Flüssigkeit im ersten Messgefäß,
   $h_{S2}$ die Füllstandshöhe der Flüssigkeit im zweiten Messgefäß und
   $\Delta h_{O12}$ die Höhendifferenz der Öffnungen der beiden Messgefäße ist.

4. Das Verfahren gemäß einem der vorhergehenden Ansprüche, wobei der Flüssigkeitsspiegel $h_{FS}$ im Flotationsbehälter durch die Gleichung:

$$h_{FS} = (((\rho_{GF} - \rho_F) \cdot h_{O2} + \rho_F \cdot h_{S2}) / \rho_{GF})$$

bestimmt wird und wobei

$\rho_{GF}$ die mittlere Dichte des Gas-Flüssigkeitsgemischs,
$\rho_F$ die Dichte der Flüssigkeit,
$h_{S2}$ die Füllstandshöhe der Flüssigkeit im zweiten Messgefäß und
$h_{O2}$ die Höhe der Öffnung des zweiten Messgefäßes, durch die Flüssigkeit aus dem Flotationsbehälter in das zweite Messgefäß eindringt, ist und die Öffnung des zweiten Messgefäßes unterhalb der Öffnung des ersten Messgefäßes angeordnet ist.

5. Das Verfahren gemäß Anspruch 1, wobei der Gasanteil GA im Flotationsbehälter durch die Gleichung

$$GA = (\rho_{GF} - \rho_F) / (\rho_G - \rho_F)$$

bestimmt wird und wobei

$\rho_{GF}$ die mittlere Dichte des Gas-Flüssigkeitsgemischs,
$\rho_F$ die Dichte der Flüssigkeit und
$\rho_G$ die Dichte des Gases ist.

6. Ein System (10) zur Bestimmung von Prozessparametern eines Gas-Flüssigkeitsgemischs (110) in einem Flotationsbehälter (100, 101, 102), vorzugsweise zur Durchführung des Verfahrens gemäß einem der obengenannten Ansprüche, umfassend:

einen Flotationsbehälter (100, 101, 102) zum Aufnehmen einer Flüssigkeit und mit Mitteln (150) zum Einleiten eines Gases in diese Flüssigkeit zur Bildung eines Gas-Flüssigkeitsgemischs (110);
ein erstes Messgefäß (141, 143, 145, 147) mit einer ersten Öffnung (151, 153, 155, 157), welche auf einer ersten Höhe innerhalb des Gas-Flüssigkeitsgemischs (110) angeordnet ist, sodass Flüssigkeit des Gas-Flüssigkeitsgemischs (110) aus dem Flotationsbehälter (100, 101, 102) durch die erste Öffnung (151, 153, 155, 157) in das erste Messgefäß (141, 143, 145, 147) eindringen kann;
ein zweites Messgefäß (142, 144, 146, 148) mit einer zweiten Öffnung (152, 154, 156, 158), welche auf einer zweiten, von der ersten Höhe verschiedenen Höhe innerhalb des Gas-Flüssigkeitsgemischs (110) angeordnet ist, sodass Flüssigkeit des Gas-Flüssigkeitsgemischs (110) aus dem Flotationsbehälter (100, 101, 102) durch die zweite Öffnung (152, 154, 156, 158) in das zweite Messgefäß (142, 144, 146, 148) eindringen kann;
Mittel (161, 162) zum Messen von Füllstandshöhen der jeweils in das erste (141, 143, 145, 147) und das zweite (142, 144, 146, 148) Messgefäß eingedrungenen Flüssigkeit; und
eine Recheneinheit (170), insbesondere ein Mikrocontroller, zum Bestimmen der mittleren Dichte des Gas-Flüssigkeitsgemischs (110) im Flotationsbehälter (100, 101, 102) in Abhängigkeit der Füllstandshöhen im ersten und im zweiten Messgefäß sowie der Höhen der ersten (151, 153, 155, 157) und der zweiten (152, 154, 156, 158) Öffnungen im Flotationsbehälter (100, 101, 102).

7. Das System gemäß Anspruch 6,
wobei die Vorrichtung weiterhin Mittel (171, 172) zum Verhindern des Eindringens von Gasblasen in die erste (151, 153, 155, 157) und/oder zweite (152, 154, 156, 158) Öffnung umfasst.

8. Das System gemäß Anspruch 6 oder 7,
wobei das erste Messgefäß (141, 143, 145, 147) als Rohr ausgebildet ist, das an einem ersten unteren Ende die erste Öffnung (151, 153, 155, 157) aufweist und an einem weiteren oberen Ende eine obere Öffnung aufweist, und/oder wobei das zweite Messgefäß (142, 144, 146, 148) als Rohr ausgebildet ist, das an einem ersten unteren Ende die zweite Öffnung (152, 154, 156, 158) aufweist und an einem weiteren oberen Ende eine weitere obere Öffnung aufweist.

9. Das System gemäß einem der Ansprüche 6 bis 8, wobei mindestens eines der Messgefäße (141, 143, 145, 147; 142, 144, 146, 148) einen im Wesentlichen U-förmigen Rohrabschnitt (172) umfasst, dessen Schenkel nach oben gerichtet sind, wobei sich an einem Ende eines Schenkels die Öffnung des jeweiligen Messgefäßes (141, 143, 145, 147; 142, 144, 146, 148), durch die Flüssigkeit in das Messgefäß (141, 143, 145, 147; 142, 144, 146, 148) eindringen kann, befindet.

**10.** Das System gemäß einem der Ansprüche 6 bis 9, wobei das System (10) an der ersten (151, 153, 155, 157) und/oder der zweiten (152, 154, 156, 158) Öffnung ein semipermeables Element (171) umfasst, das ein Eindringen von Gasblasen (120) und Feststoffen in die jeweilige Öffnung (151, 153, 155, 157; 152, 154, 156, 158) verhindert, wobei das semipermeable Element (171) insbesondere durch einen Filter, ein Sieb, einen porösen Körper oder einen Schwamm gebildet ist.

**11.** Das System gemäß einem der Ansprüche 6 bis 10, wobei die Mittel zum Messen von Füllstandshöhen mindestens einen Ultraschallsensor aufweisen oder je Messgefäß (141, 143, 145, 147; 142, 144, 146, 148) einen Schwimmer (161, 162) umfassen.

**12.** Das System gemäß einem der Ansprüche 6 bis 11, wobei der Flotationsbehälter (100, 101, 102) an einem oberen Ende eine Öffnung umfasst und mindestens eines der Messgefäße (145, 147, 148) durch diese Öffnung in das Gas-Flüssigkeitsgemisch (110) einführbar und wieder aus diesem entnehmbar ist.

**13.** Das System gemäß einem der Ansprüche 6 bis 12, wobei die Mittel zum Einleiten von Gas (150) einen Einlass (115) zum Einleiten von Gas oder eines Gas-Flüssigkeitsgemischs (110) in den Flotationsbehälter (100, 101, 102) umfassen, wobei der Einlass (115) in einer unteren Hälfte, insbesondere in einem unteren Drittel, des Flotationsbehälters (100, 101, 102) angeordnet ist, sodass der Flotationsbehälter (100, 101, 102) von unten nach oben durch eingeleitetes Gas durchströmbar ist.

**14.** Das System gemäß Anspruch 13, wobei eine der ersten und der zweiten Öffnungen (151, 153, 155, 157; 152, 154, 156, 158) unterhalb des Einlasses (115) angeordnet ist und eine weitere der ersten und der zweiten Öffnungen (151, 153, 155, 157; 152, 154, 156, 158) oberhalb des Einlasses (115) angeordnet ist; oder wobei sowohl die erste als auch die zweite Öffnung (151, 153, 155, 157; 152, 154, 156, 158) oberhalb des Einlasses (115) angeordnet sind.

**15.** Das System gemäß einem der Ansprüche 6 bis 14, weiterhin umfassend eines oder mehrere der folgenden Mittel: Mittel (180) zum Absaugen von Schaum einer sich oberhalb des Flüssigkeitsspiegels des Gas-Flüssigkeitsgemischs (110) bildenden Schaumschicht (130); Mittel (190) zum Zuführen der Flüssigkeit des Gas-Flüssigkeitsgemischs (110), vorzugsweise in die obere Hälfte des Flotationsbehälters (100, 101, 102); Mittel (210) zum Absaugen von Flüssigkeit, vorzugsweise unterhalb eines Einlasses (115) zum Einleiten von Gas und eines Anschlusses (119) zum Zuführen der Flüssigkeit in den Flotationsbehälter (100, 101, 102); und Mittel (200) zum Absaugen und vorzugsweise zum Rückführen von sich oberhalb der Schaumschicht (130) befindendem Gas.

FIG 1

FIG 2

FIG 3

FIG 4

FIG 5

Europäisches Patentamt
European Patent Office
Office européen des brevets

**EUROPÄISCHER RECHERCHENBERICHT**

Nummer der Anmeldung

EP 15 19 0247

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 5 368 166 A (CHUMAK FEDOR A [SU] ET AL) 29. November 1994 (1994-11-29) * Spalte 4 - Spalte 14; Abbildungen 1,2 * ----- | 1-8, 11-15 | INV. B03D1/02 G01F23/16 G01D21/00 G01N9/26 |
| Y | WENCHENG XIA ET AL: "Reliability of gas holdup measurements using the differential pressure method in a cyclone-static micro-bubble flotation column", MINING SCIENCE AND TECHNOLOGY (CHINA), Bd. 21, Nr. 6, 1. November 2011 (2011-11-01), Seiten 797-801, XP055067711, ISSN: 1674-5264, DOI: 10.1016/j.mstc.2011.06.026 * Seite 798; Abbildung 1 * ----- | 1-6,8, 11-15 | |
| Y | HULS B J ET AL: "Level detection in flotation columns at Falconbridge", MINERALS AND METALLURGICAL PROCESSING,, 1. Januar 1990 (1990-01-01), Seiten 173-177, XP009170685, ISSN: 0747-9182 * Seite 173 - Seite 174; Abbildung 1 * ----- | 1-6,8, 11-15 | |
| Y | KAMALENDU BHUNIA ET AL: "Pressure Characteristics in a Flotation Column", INTERNATIONAL JOURNAL OF CHEMTECH RESEARCH, Bd. 6, Nr. 1, 31. März 2014 (2014-03-31), Seiten 276-285, XP055253986, India ISSN: 0974-4290 * Seite 277 - Seite 281; Abbildungen 1,2 * ----- -/-- | 1-6,8, 11-15 | |

| RECHERCHIERTE SACHGEBIETE (IPC) |
|---|
| B03D G01F G01D G01N |

Der vorliegende Recherchenbericht wurde für alle Patentansprüche erstellt

| Recherchenort | Abschlußdatum der Recherche | Prüfer |
|---|---|---|
| München | 2. März 2016 | Roider, Josef |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung

EP 15 19 0247

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | MCNIECE HUGH ET AL: "Froth Flotation Instrumentation and Control", WORLD MINING EQUIPMENT,, Bd. 8, Nr. 10, 1. Oktober 1984 (1984-10-01), Seiten 27-33, XP009170509, ISSN: 0746-729X * Seite 27 - Seite 28; Abbildung 1 * ----- | 1-6,8, 11-15 | |
| Y | J.A. HAMILTON ET AL: "Pulp level control for flotation - options and a CSIRO laboratory perspective", MINERALS ENGINEERING, Bd. 14, Nr. 1, 1. Januar 2001 (2001-01-01), Seiten 77-86, XP055058469, ISSN: 0892-6875, DOI: 10.1016/S0892-6875(00)00161-8 * Seite 78; Abbildung 1 * ----- | 1-6,8, 11-15 | |
| Y | GB 972 551 A (COAL INDUSTRY PATENTS LTD) 14. Oktober 1964 (1964-10-14) * Seite 2, Zeile 1 - Zeile 15; Abbildung 1 * ----- | 7 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 2. März 2016 | Roider, Josef |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 19 0247

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-03-2016

| Im Recherchenbericht angeführtes Patentdokument | Datum der Veröffentlichung | Mitglied(er) der Patentfamilie | Datum der Veröffentlichung |
|---|---|---|---|
| US 5368166 A | 29-11-1994 | AU 6329790 A<br>CA 2051327 A1<br>DE 4031259 A1<br>GB 2248508 A<br>US 5368166 A | 02-04-1992<br>14-03-1993<br>09-04-1992<br>08-04-1992<br>29-11-1994 |
| GB 972551 A | 14-10-1964 | KEINE | |

EPO FORM P0461

Für nähere Einzelheiten zu diesem Anhang : siehe Amtsblatt des Europäischen Patentamts, Nr.12/82